# FASCICULE DE BREVET EUROPEEN

(11) **EP 1 893 552 B1**
(45) Date de publication et mention de la délivrance du brevet: **28.08.2013**
(21) Numéro de dépôt: 06743771.5
(22) Date de dépôt: 09.05.2006
(51) Int. Cl.: C04B 41/45, C04B 41/53, C04B 41/61, C04B 41/72, C04B 41/00

(54) **ELECTRODE ET PROCEDE POUR LE TRAITEMENT DE CONSTRUCTIONS ET DE TERRAINS PAR APPLICATION D'UN CHAMP ELECTRIQUE**
ELEKTRODE UND VERFAHREN ZUR BEHANDLUNG VON GEBÄUDEN UND LAND DURCH ANLEGEN EINES ELEKTRISCHEN FELDS
ELECTRODE AND METHOD FOR PROCESSING BUILDINGS AND GROUNDS BY APPLYING AN ELECTRIC FIELD

(30) Priorité: 27.05.2005 FR 0505359
(43) Date de publication de la demande: 05.03.2008
(73) Titulaire: Chasteau, François, 92400 Courbevoie (FR); IFP Energies nouvelles, 92852 Rueil-Malmaison Cedex (FR)
(72) Inventeur: Chasteau Francois, 92400 Courbevoie (FR)
(74) Mandataire: Andrieux, Benoît
(86) Numéro de dépôt international: PCT/FR2006/001017
(87) Numéro de publication internationale: WO 2006/125878

(56) Documents cités:
- AU-B2- 474 824
- DE-A1- 2 706 193
- DE-A1- 2 927 049
- DE-A1- 3 714 943
- FR-A- 2 478 164
- US-A- 5 296 120

## Description

La présente invention concerne les électrodes et les procédés pour le traitement de constructions et de terrains par application d'un champ électrique.

On sait que, par application d'un champ électrique à une construction ou à un terrain, il est possible, par électro-osmose, d'assainir cette construction ou ce terrain en les asséchant. On sait de plus que, par électro-injection, on peut injecter dans une construction ou un terrain, grâce à la formation d'un champ hydraulique d'origine électro-osmotique, un produit de traitement (par exemple inhibiteur de corrosion, minéralisateur, produit de consolidation, produit d'étanchement, produit de colmatage, etc ...) miscible à l'eau. Les documents WO 02/33147 et WO 02/33148, par exemple, décrivent de tels procédés.

La mise en oeuvre de ces procédés connus exige naturellement des électrodes pour appliquer le champ électrique à ladite construction et audit terrain. Les électrodes connues utilisées à cet effet se présentent généralement sous la forme de corps métalliques discrets, par exemple de forme cylindrique, devant être logés dans des perçages pratiqués dans la construction ou le terrain. Une autre électrode est divulguée dans US 5296120 A.

La présente invention a pour objet d'améliorer les électrodes utilisées dans les traitements des constructions et des terrains par voie électrique, ainsi que de simplifier.leur mise en oeuvre, tout en permettant de traiter une vaste superficie desdites constructions et desdits terrains.

A cette fin, selon l'invention, l'électrode pour le traitement d'une construction ou d'un terrain par application d'un champ électrique, ladite électrode étant apte à être appliquée sur une surface accessible de ladite construction ou dudit terrain et à en épouser la forme, est remarquable en ce qu'elle est constituée par au moins une pièce de matière souple, la matière constitutive de ladite pièce étant par nature, à la fois, électriquement conductrice et absorbante pour les liquides aqueux.

Une telle électrode peut aussi bien servir à l'électro-osmose qu'à l'électro-injection. Notamment en cas d'utilisation en électro-injection, ladite matière souple absorbante pour les liquides aqueux constitue une réserve de ceux-ci. En outre, dans la présente invention, ladite matière souple est constituée par un entrelacs de mèches de fibres de carbone électriquement conductrices. On comprendra aisément que, par capillarité, une telle matière souple peut retenir un produit aqueux, d'une part, entre les fibres des mèches et, d'autre part, entre les mèches elles-mêmes, de sorte qu'elle présente une certaine propriété d'absorption des liquides aqueux.

Ladite pièce de matière souple, formant électrode, peut présenter toute forme désirée ou imposée par le traitement. Elle peut même recouvrir la totalité de ladite surface accessible. Cependant, dans un mode de réalisation usuel destiné plus particulièrement à un traitement de surface, ladite pièce de matière souple peut présenter la forme d'une bande.

La présente invention concerne de plus un procédé pour le traitement d'une construction par application d'un champ électrique. Selon ce procédé :
- on applique et on fixe sur au moins une surface accessible de ladite construction au moins une pièce de matière souple telle que spécifiée ci-dessus, de façon que ladite pièce épouse la forme de ladite surface accessible ; et
- on porte ladite pièce souple à un potentiel électrique, pour lui permettre de faire fonction soit d'anode, soit de cathode.

La fixation de ladite matière souple sur ladite surface accessible peut être réalisée de toute manière connue et par l'intermédiaire de tout produit également connu. Cependant, dans un mode avantageux de mise en oeuvre du procédé conforme à la présente invention, on réalise ladite fixation au moyen d'un liant poreux (ciment, plâtre, chaux, etc ...).

Lorsque ladite pièce de matière souple est destinée à l'électro-injection, elle est portée à un potentiel électrique positif et elle est alimentée par une solution aqueuse du produit de traitement à injecter. L'alimentation de la pièce de matière souple en un tel produit peut se faire par aspersion ou pulvérisation de ladite pièce par ledit produit ou bien encore au moyen d'un tube d'alimentation souple percé, associé à ladite pièce de matière souple.

Dans une forme de mise en oeuvre du procédé conforme à la présente invention permettant un traitement de surface, on utilise une pluralité de pièces de matière souple présentant la forme de bandes et on les agence sur ladite surface accessible de façon parallèle et espacée, deux bandes adjacentes étant portées à des potentiels de signes opposés. On obtient ainsi des lignes de courant électro-osmotiques transversales auxdites bandes, qui vont de chaque anode aux deux cathodes adjacentes et dont la profondeur dans ladite construction, à travers ladite surface accessible, dépend de paramètres tels que la largeur desdites bandes et l'écartement de celles-ci.

Afin d'inverser le sens desdites lignes de courant électro-osmotiques, et ainsi améliorer ledit traitement, il est avantageux que chacune desdites bandes de l'agencement soit alternativement portée, dans le temps, à des potentiels de signes opposés. Ainsi, les anodes deviennent alternativement cathodes et inversement.

Pour des traitements en profondeur de construction ou de terrain, ladite pièce de matière souple, fixée sur ladite surface accessible, peut coopérer avec au moins une électrode de nature différente portée à un potentiel de signe opposé à celui du potentiel appliqué à ladite pièce souple.

Une telle électrode de nature différente peut préexister dans la construction ou dans ledit terrain ou bien y être introduite. Dans le premier cas, il peut s'agir d'une armature métallique de construction. Dans le second, ladite électrode de nature différente peut être constituée par au moins un objet métallique (par exemple barre, piquet, ...).

Cependant, dans un mode de réalisation avantageux, ladite électrode de nature différente est formée par au moins une poche de liquide électriquement conducteur. On remarquera en effet qu'un tel liquide est relativement aisé à injecter dans la construction ou dans le sol, par exemple dans des cavités préexistantes de ceux-ci.
Les figures du dessin annexé feront bien comprendre comment l'invention peut être réalisée. Sur ces figures, des références identiques désignent des éléments semblables.
Les figures 1 et 2 illustrent schématiquement en coupe deux exemples de structure pour une électrode,
comportant un corps spongieux, qui ne fait pas partie de l'invention.
La figure 3 montre schématiquement en vue de dessus une portion d'une électrode conforme à la présente invention, illustrant la structure de ladite électrode.
Les figures 4 et 5 sont des vues schématiques, respectivement en plan et en coupe, illustrant un mode de mise en oeuvre d'électrodes conformes à la présente invention.
Les figures 6 et 7 sont des vues schématiques, respectivement en plan (avec arraché) et en coupe, illustrant des moyens d'alimentation en produit de traitement d'une électrode conforme à la présente invention et destinée à l'électro-injection dudit produit.
Les figures 8 à 10 illustrent schématiquement trois autres modes de mise en oeuvre des électrodes conformes à la présente invention.

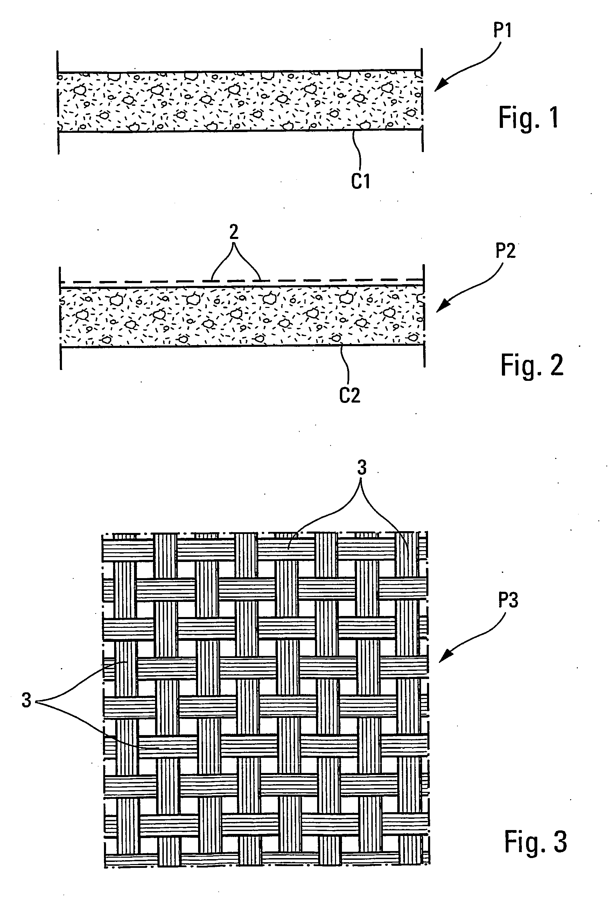

La portion de pièce de matière souple P1, montrée schématiquement sur la figure 1, comporte un corps spongieux C1 électriquement conducteur, par exemple réalisé en une mousse d'un polymère conducteur ou en une mousse de carbone.

Dans l'exemple de réalisation de la figure 2, la portion de pièce de matière souple P2 comporte un corps spongieux C2 non électriquement conducteur recouvert d'un grillage métallique 2.

La portion de pièce de matière souple P3, électriquement conductrice, montrée par la figure 3, est formée par un entrelacs des mèches 3 (non rigidement liées les unes aux autres), chaque mèche 3 étant constituée d'une pluralité de fibres. A l'intérieur d'une mèche 3, les fibres qui la constituent sont sensiblement parallèles, sans être liées rigidement les unes aux autres, et sont électriquement conductrices. A cet effet, elles sont constituées de carbone.

On comprend donc aisément qu'une telle pièce de matière souple P3 est électriquement conductrice et, tout comme les pièces P1 et P2, apte à être appliquée sur une surface accessible d'une construction ou d'un terrain et à épouser la forme de ladite surface. De plus, grâce aux liaisons relativement lâches des fibres à l'intérieur des mèches 3, d'une part, et des mèches 3 entre elles, d'autre part, une telle pièce de matière souple P3 présente une certaine capacité à absorber et à retenir les liquides, notamment aqueux.

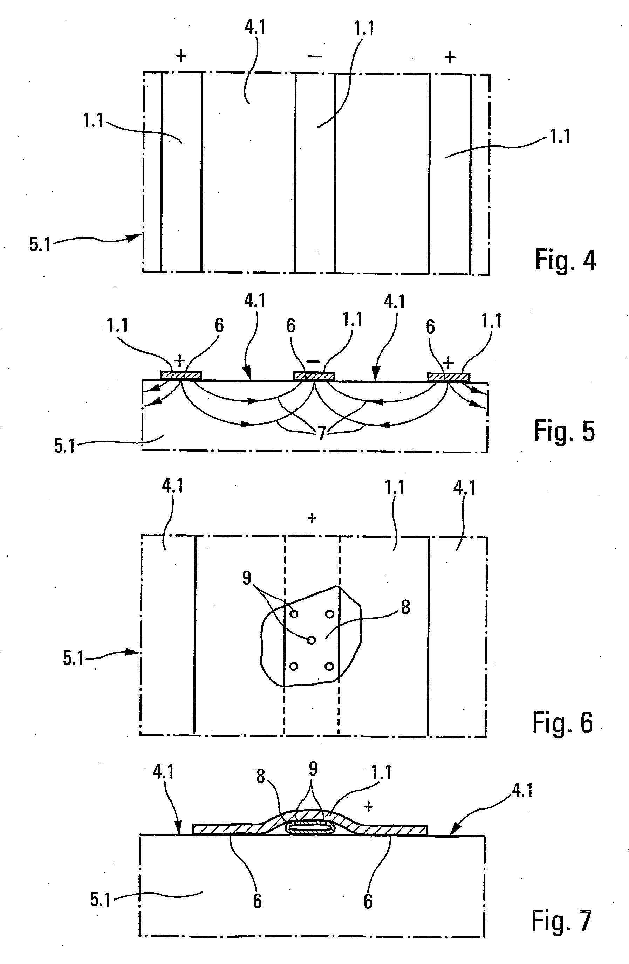

Dans le mode de mise en oeuvre de l'invention, illustré schématiquement sur les figures 4 et 5, des pièces de matière souple 1.1 (de constitution identique aux pièces de matière souple P1, P2 ou P3 décrites ci-dessus) présentent la forme de bandes. Chaque pièce de matière souple 1.1 est appliquée contre une surface accessible 4.1 d'une construction ou d'un terrain 5.1 (dont seule une petite portion est représentée sur les figures 4 et 5), en épousant la forme de ladite surface 4.1. Grâce à un liant poreux 6 (ciment, plâtre, chaux, ...), les pièces de matière souple 1.1 sont fixées sur ladite surface accessible 4.1 en étant disposées parallèlement les unes aux autres.

Comme cela est illustré schématiquement sur la figure 5, si dans leur agencement en bandes parallèles, lesdites pièces de matière souple 1.1 sont alternativement reliées à des pôles+ et à des pôles- d'une source électrique (non représentée) et jouent donc respectivement les rôles d'anode et de cathode, il se crée des lignes électro-osmotiques 7, transversale auxdites pièces de matière souple 1.1, allant de chacune d'elles faisant fonction d'anode (pole+) aux pièces de matière souple 1.1 adjacentes, faisant fonction de cathode (pôle-). La profondeur de pénétration des lignes électro-osmotiques 7 à l'intérieur de la construction ou du terrain 5.1 dépend de la largeur de chaque pièce de matière souple 1.1 et de l'espacement entre les pièces de matière souple.

Ainsi, si les pièces de matière souple 1.1 faisant fonction d'anode contiennent un produit de traitement de la construction ou du terrain mélangé à de l'eau, ce produit est véhiculé en direction des pièces de matière souple 1.1 faisant fonction de cathode en suivant les lignes électro-osmotiques 7. On obtient ainsi l'électro-injection dudit produit.

Les pièces de matière souple 1.1 faisant fonction d'anode peuvent par exemple être alimentées en produit de traitement par aspersion ou pulvérisation. En effet, grâce à la structure desdites pièces de matière souple 1.1, comme indiqué ci-dessus, celles-ci présentent une certaine capacité à absorber et à retenir ledit produit.

En variante, comme cela est illustré par les figures 6 et 7, les pièces de matière souple 1.1 peuvent être alimentées en produit de traitement par un tube souple 8, disposé le long desdites pièces, ledit tube souple 8 étant percé de trous 9 à travers lesquels ledit produit passe goutte-à-goutte en direction de ladite pièce 1.1.

Dans les mises en oeuvre des figures 4 à 7, les polarités des pièces de matière souple 1.1 peuvent être modifiées dans le temps, de façon que les pièces de matière souple 1.1 faisant office de cathode deviennent des anodes et, inversement, que les pièces 1.1 faisant office d'anode deviennent des cathodes. Ainsi, on inverse le sens des lignes électro-osmotiques 7 et donc le sens de l'injection du produit de traitement. Il en résulte donc des traitements de sens croisés permettant d'obtenir de meilleurs résultats.

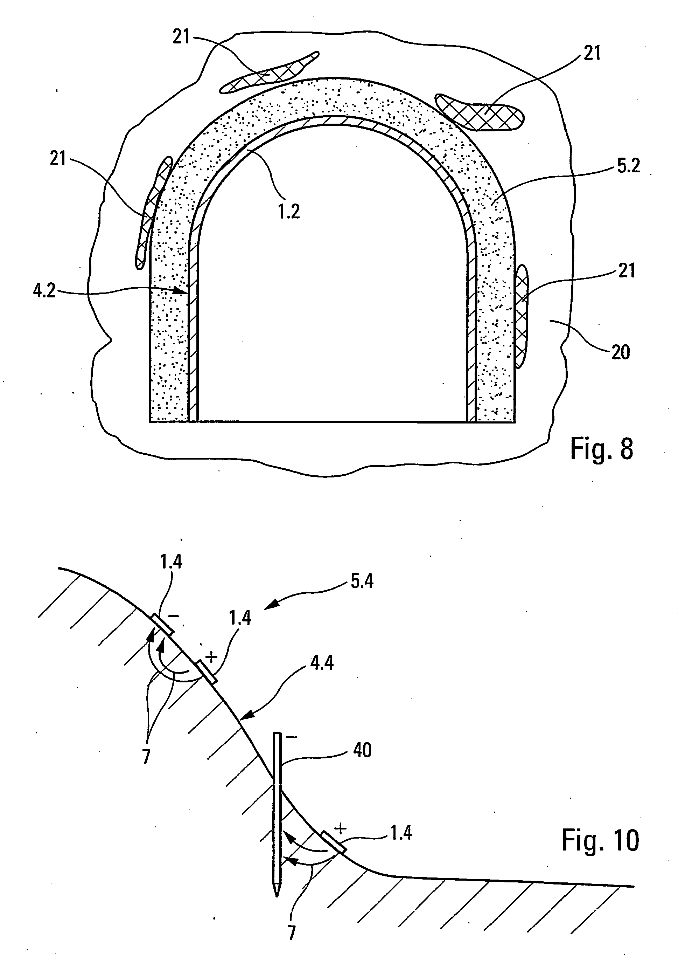

Dans la forme de mise en oeuvre du procédé conforme à la présente invention représenté sur la figure 8, la construction à traiter est un tunnel 5.2 construit dans un terrain 20. Dans ce cas, on a revêtu la totalité de la surface accessible 4.2 dudit tunnel de pièces 1.2 de matière souple, électriquement conductrice, conformes à la présente invention. En plus, dans le terrain 20 entourant le tunnel 5.2, on a introduit des électrodes 21, par exemple constituées par des objets métalliques ou des poches de liquide électriquement conducteur introduits spécialement à cet effet. Dans le dernier cas cité, le liquide peut être injecté sous pression, par exemple à travers la maçonnerie du tunnel 5.2. Les électrodes 21 sont par exemple polarisées en cathode, alors que les pièces de matière souple 1.2 sont polarisées en anode. Il en résulte que des lignes électro-osmotiques (non représentées, mais semblables à celles portant la référence 7 sur la figure 3) se forment entre les anodes 1.2 et les cathodes 21, permettant un traitement d'électro-osmose ou d'électro-injection du tunnel 5.2.

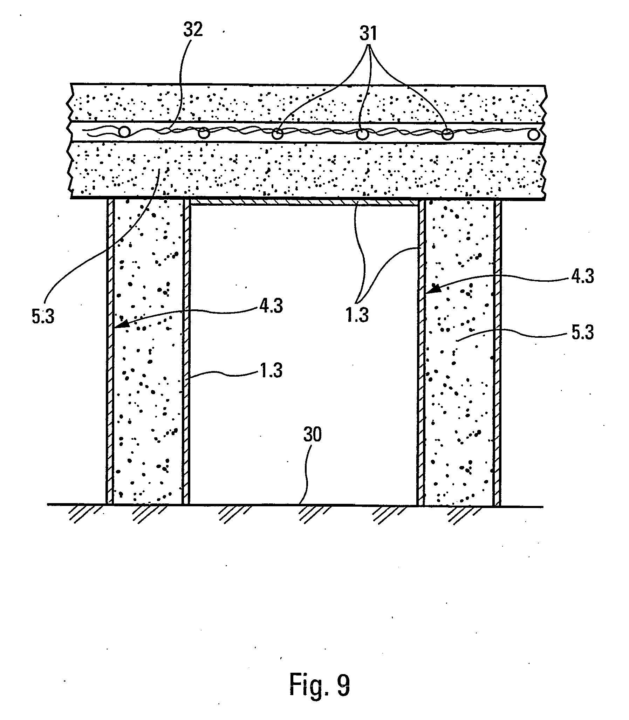

Sur la figure 9, on a illustré schématiquement un pont 5.3 en béton armé reposant sur le sol 30. La surface accessible 4.3 du pont 5.3 est recouverte de pièces de matière souple 1.3, conformes à la présente invention, servant d'anodes. Par ailleurs, des éléments 31 de l'armature 32 sont reliés à un pôle négatif, de façon que cette dernière puisse servir de cathode. En variante, lesdits éléments 31, par exemple des barres, pourraient être introduits dans le pont 5.3.

Sur la figure 10, on a représenté schématiquement en coupe un talus ou remblai 5.4, par exemple en situation de glisser à la suite d'une saturation par eau de pluie. La surface accessible 4.4 du talus ou remblai 5.4 est recouverte de pièces de matière souple 1.4 en forme de bandes conformes à la présente invention et aptes à servir d'anodes ou de cathodes. Eventuellement, certaines des pièces de matière souple 1.4 sont associées à des piquets métalliques 40 plantés dans le sol et portés à un potentiel opposé.

## Revendications

1. Electrode pour le traitement d'une construction ou d'un terrain (5.1 ; 5.2 ; 5.3 ; 5.4) par application d'un champ électrique, ladite électrode pouvant aussi bien servir à l'électro-osmose qu'à l'électro-injection et étant apte à être appliquée sur une surface accessible (4.1 ; 4.2 ; 4.3 ; 4.4) de ladite construction ou terrain (5.1 ; 5.2 ; 5.3 ; 5.4) et à en épouser la forme,
**caractérisée en ce qu'**elle est constituée par au moins une pièce de matière souple (1.1 ; 1.2 ; 1.3 ; 1.4), ladite matière constitutive de ladite pièce étant par nature, à la fois, électriquement conductrice et absorbante , par capillarité, pour les liquides aqueux, ladite matière souple est un entrelacs de mèches de fibres de carbone électriquement conductrices (3).

2. Electrode selon la revendication précédente
**caractérisée en ce que** ladite pièce de matière souple, électriquement conductrice, présente la forme d'une bande (1.1 ; 1.4)

3. Procédé pour le traitement d'une construction ou d'un terrain par application d'un champ électrique **caractérisé en ce que** :
- on applique et on fixe sur au moins une surface accessible (4.1 ; 4.2 ; 4.3 ; 4.4) de ladite construction ou dudit terrain (5.1 ; 5.2 ; 5,3 ; 5.4) au moins une pièce de matière souple (1.1; 1.2 ; 1.3 ; 1.4) telle que spécifiée sous l'une quelconque des revendications 1 à 2, de façon que ladite pièce épouse la forme de ladite surface accessible ; et
- on porte ladite pièce de matière souple à un potentiel électrique.

4. Procédé selon la revendication 3,
**caractérisé en ce que** ladite pièce de matière souple est fixée sur ladite surface accessible (4.1 ; 4 ; 4.3 ; 4.4) par l'intermédiaire d'un liant poreux de maçonnerie (6).

5. Procédé selon l'une des revendications 3 ou 4, destiné à l'électro-injection d'un produit de traitement de ladite construction ou du dit terrain,
**caractérisé en ce que** ladite pièce de matière souple (1.1; 1.2 ; 1.3 ; 1.4) est portée à un potentiel électrique positif et est alimentée par une solution aqueuse dudit produit de traitement.

6. Procédé selon la revendication 5,
**caractérisé en ce que** l'alimentation en produit de traitement se fait par aspersion ou pulvérisation de ladite pièce de matière souple (1 .1 ; 1.2 ; 1,3; 1.4).

7. Procédé selon la revendication 5,
**caractérisé en ce que** l'alimentation en produit de traitement est obtenue au moyen d'un tube d'alimentation souple percé (8), associé à ladite pièce de matière souple.

8. Procédé selon l'une des revendications 3 à 7, selon lequel on utilise des pièces de matière souple (1 .1 ; 1.4) présentant la forme de bandes, telles que spécifiées sous la revendication 6, **caractérisé en ce que** lesdites pièces de matière souple forment, sur ladite surface accessible (4.1 ; 4.4), un agencement d'une pluralité de bandes parallèles espacées dans lequel deux bandes adjacentes sont reliées à des potentiels de polarité opposée.

9. Procédé selon la revendication 8,
**caractérisé en ce que** chaque bande (1.1) dudit agencement est alternativement reliée à des potentiels de polarité opposée.

10. Procédé selon l'une des revendications 3 à 7,
**caractérisé en ce que** ladite pièce de matière souple (1 .2 ; 1.3 ; 1.4), fixée sur ladite surface accessible (4.2 ; 4.3 ; 4.4), coopère avec au moins une électrode (21, 31, 40) de nature différente portée à un potentiel de polarité opposée à celle du potentiel appliqué à ladite pièce souple.

11. Procédé selon la revendication 10,
**caractérisé en ce que** ladite électrode de nature différente (31) est constituée par une armature métallique préexistante.

12. Procédé selon la revendication 10,
**caractérisé en ce que** ladite électrode de nature différente (21, 40) est introduite dans ladite construction ou dans ledit terrain.

13. Procédé selon la revendication 12,
**caractérisé en ce que** ladite électrode de nature différente est formée par au moins une poche de liquide électriquement conducteur (21).

## Patentansprüche

1. Elektrode für die Behandlung eines Bauwerks oder eines Grundstücks (5.1; 5.2; 5.3; 5.4) durch Anlegen eines elektrischen Felds, wobei die Elektrode sowohl zur Elektroosmose als auch zur Elektroinjektion dienen kann und geeignet ist, an einer zugänglichen Fläche (4.1; 4.2; 4.3; 4.4) des Bauwerks oder Grundstücks (5.1, 5.2; 5.3; 5.4) angebracht zu werden und sich an die Fläche anzupassen,
**dadurch gekennzeichnet, dass** sie durch mindestens ein Teil (1.1; 1.2; 1.3; 1.4) aus biegsamem Material gebildet ist, wobei das Material, aus dem das Teil besteht, durch seine Beschaffenheit gleichzeitig elektrisch leitfähig und durch Kapillarität absorbierend für wässerige Flüssigkeiten ist, wobei das biegsame Material ein Flechtwerk von elektrisch leitfähigen Kohlenstofffasergarnen (3) ist.

2. Elektrode nach dem vorhergehenden Anspruch,
**dadurch gekennzeichnet, dass** das Teil aus biegsamem, elektrisch leitfähigem Material die Form eines Streifens (1.1; 1.4) aufweist.

3. Verfahren zur Behandlung eines Bauwerks oder eines Grundstücks durch Anlegen eines elektrischen Felds, **dadurch gekennzeichnet, dass**:
- mindestens ein Teil aus biegsamem Material (1.1; 1.2; 1.3; 1.4) nach einem der vorhergehenden Ansprüche 1 bis 2 derart auf mindestens einer zugänglichen Fläche (4.1; 4.2; 4.3; 4.4) des Bauwerks oder des Grundstücks (5.1; 5.2; 5.3; 5.4) befestigt wird, dass das Teil die Form der zugänglichen Fläche annimmt; und
- das Teil aus biegsamem Material auf ein elektrisches Potential gebracht wird.

4. Verfahren nach Anspruch 3,
**dadurch gekennzeichnet, dass** das Teil aus biegsamem Material über ein poröses Bindemittel für Mauerwerk (6) auf der zugänglichen Fläche (4.1; 4; 4.3; 4.4) befestigt wird.

5. Verfahren nach einem der Ansprüche 3 oder 4, das zur Elektroinjektion eines Produkts zur Behandlung des Bauwerks oder des Grundstücks bestimmt ist,
**dadurch gekennzeichnet, dass** das Teil aus biegsamem Material (1.1; 1.2; 1.3; 1.4) auf ein positives elektrisches Potential gebracht wird und durch eine wässerige Lösung des Behandlungsprodukts versorgt wird.

6. Verfahren nach Anspruch 5,
**dadurch gekennzeichnet, dass** die Versorgung mit Behandlungsprodukt durch Besprühen oder Zerstäubung des Teils aus biegsamem Material (1,1; 1.2; 1.3; 1.4) erfolgt.

7. Verfahren nach Anspruch 5,
**dadurch gekennzeichnet, dass** die Versorgung mit Behandlungsprodukt mittels eines durchbohrten biegsamen Versorgungsschlauchs (8) erhalten wird, der mit dem Teil aus biegsamem Material verbunden ist.

8. Verfahren nach einem der Ansprüche 3 bis 7, wobei Teile aus biegsamem Material (1.1; 1.4) nach Anspruch 6 verwendet werden, die die Form von Streifen aufweisen, **dadurch gekennzeichnet, dass** die Teile aus biegsamem Material auf der zugänglichen Fläche (4.1; 4.4) eine Anordnung mehrerer paralleler beabstandeter Streifen bilden, wobei zwei benachbarte Streifen mit Potentialen mit entgegengesetzter Polarität verbunden sind.

9. Verfahren nach Anspruch 8,
**dadurch gekennzeichnet, dass** jedes Band (1.1) der Anordnung abwechselnd mit Potentialen mit entgegengesetzter Polarität verbunden ist.

10. Verfahren nach einem der Ansprüche 3 bis 7,
**dadurch gekennzeichnet, dass** das Teil aus biegsamem Material (1.2; 1.3; 1.4), das auf der zugänglichen Fläche (4.2; 4.3; 4.4) befestigt wird, mit mindestens einer Elektrode (21, 31, 40) von unterschiedlicher Beschaffenheit zusammenwirkt, die auf ein Potential gebracht wird,
dessen Polarität zu demjenigen, das an das biegsame Teil angelegt wird, entgegengesetzt ist.

11. Verfahren nach Anspruch 10,
**dadurch gekennzeichnet, dass** die Elektrode von unterschiedlicher Beschaffenheit (31) durch eine zuvor bestehende metallische Armierung gebildet ist.

12. Verfahren nach Anspruch 10,
**dadurch gekennzeichnet, dass** die Elektrode von unterschiedlicher Beschaffenheit (21, 40) in das Bauwerk oder in das Grundstück eingeführt wird.

13. Verfahren nach Anspruch 12,
**dadurch gekennzeichnet, dass** die Elektrode von unterschiedlicher Beschaffenheit durch mindestens eine elektrisch leitfähige Flüssigkeitsansammlung (21) gebildet ist.

## Claims

1. An electrode for treating buildings or grounds (5.1, 5.2, 5.3, 5.4) by applying an electric field, said electrode being intended for electro-osmosis as well as electro-injection and being suitable for application to an accessible surface (4.1, 4.2, 4.3, 4.4) of said buildings or grounds (5.1, 5.2, 5.3, 5.4) and fitting the shape thereof,
**characterized in that** it is made up of at least one piece made of a flexible material (1.1, 1.2, 1.3, 1.4), said constituent material of said piece being, by nature, both electrically conductive and absorbent, by capillarity, for aqueous liquids, said flexible material consisting of interlacing strands of electrically conductive carbon fibers.

2. An electrode as claimed in the previous claim,
**characterized in that** said electrically conductive piece made of a flexible material has the shape of a strip (1.1 ; 1.4).

3. A method of treating buildings or grounds by applying an electric field, **characterized in that** it comprises:
- applying and fastening onto at least one accessible surface (4.1, 4.2, 4.3, 4.4) of said building or of said ground (5.1, 5.2, 5.3, 5.4) at least one piece made of a flexible material (1.1, 1.2, 1.3, 1.4) as claimed in any one of claims 1 to 2, so that said piece fits the shape of said accessible surface, and
- bringing said piece made of a flexible material to an electric potential.

4. A method as claimed in claim 3,
**characterized in that** said piece made of a flexible material is fastened to said accessible surface (4.1, 4.2, 4.3, 4.4) by means of a porous masonry binder (6).

5. A method as claimed in any one of claims 3 or 4, intended for electro-injection of a product for treating said building or said ground,
**characterized in that** said piece made of a flexible material (1.1, 1.2, 1.3, 1.4) is brought to a positive electric potential and it is supplied with an aqueous solution of said treatment product.

6. A method as claimed in claim 5,
**characterized in that** the treatment product is supplied by sprinkling or spraying onto said piece made of a flexible material (1.1, 1.2, 1.3, 1.4).

7. A method as claimed in claim 5,
**characterized in that** the treatment product is supplied using a pierced flexible supply tube (8) associated with said piece made of a flexible material.

8. A method as claimed in any one of claims 3 to 7, comprising using pieces made of a flexible material (1.1; 1.4) in form of strips as claimed in claim (2), **characterized in that** said pieces made of a flexible material form, on said accessible surface (4.1 ; 4.4), an arrangement of a plurality of spaced-out parallel strips wherein two adjacent strips are connected with potentials of opposite polarity.

9. A method as claimed in claim 8,
**characterized in that** each strip (1.1) of said arrangement is alternatively connected with potentials of opposite polarity.

10. A method as claimed in any one of claims 3 to 7,
**characterized in that** said piece made of a flexible material (1.1, 1.2, 1.3, 1.4) fastened to said accessible surface (4.2, 4.3, 4.4) cooperates with at least one electrode (21, 31, 40) of different nature brought to a potential of opposite polarity in relation to that of the potential applied to said flexible piece.

11. A method as claimed in claim 10,
**characterized in that** said electrode of different nature (31) consists of a pre-existing metal reinforcement.

12. A method as claimed in claim 10,
**characterized in that** said electrode of different nature (21, 40) is inserted into said building or said ground.

13. A method as claimed in claim 12,
**characterized in that** said electrode of different nature consists of at least one electrically conductive liquid bag (21).
